# EUROPÄISCHE PATENTANMELDUNG

(11) **EP 2 607 117 A1**
(43) Veröffentlichungstag der Anmeldung: **26.06.2013**
(21) Anmeldenummer: 11195625.6
(22) Anmeldetag: 23.12.2011
(51) Int. Cl.: B60G 13/14, B60K 25/10, B60K 6/12

(54) **Rekuperation der Schwingungsenergie eines Fahrzeugs**

(71) Anmelder: Fliegl, Helmut, 07819 Triptis (DE)
(72) Erfinder: Fliegl, Helmut, 07819 Triptis (DE)
(74) Vertreter: Kramer - Barske - Schmidtchen

(57) **Zusammenfassung**

Es ist ein Rekuperationssystem (10) für ein Fahrzeug (1), das ein Chassis (2) und wenigstens ein Radpaar (3) aufweist, offenbart. Das Rekuperationssystem (10) umfasst einen Hydrauliktank (12), der dazu ausgebildet ist, ein hydraulisches Medium zu speichern, einen Hochdruckspeicher (14), der dazu ausgebildet ist, das hydraulische Medium unter einem Hochdruck zu speichern, und eine mit dem Hydrauliktank (12) und dem Hochdruckspeicher (14) fluidverbunde Pumpeinheit (20), die dazu ausgebildet ist, unter Nutzung von zwischen dem Chassis (2) und dem wenigstens einem Rad (3) auftretenden Relativbewegungen das hydraulische Medium aus dem Hydraulikspeicher (12) in den Hochdruckspeicher (14) zu pumpen.

## Beschreibung

### Technisches Gebiet

Die vorliegende Erfindung betrifft ein Rekuperationssystem für ein Fahrzeug, das zum hydraulischen Speichern der Schwingungsenergie des Fahrzeugs ausgebildet ist.

### Hintergrund der Erfindung

In nahezu allen bekannten Fahrzeugen sind die Räder gegenüber dem Fahrzeugrahmen beweglich gelagert, um z. B. die durch unebene Fahrbahnen, Kurvenfahrten und Verzögerungs- oder Beschleunigungsvorgängen verursachten Stöße und Bewegungsanregungen auf ein Fahrzeug möglichst kurzfristig zu dämpfen. Dazu werden Stoßdämpfer eingesetzt, die die kinematische Energie des Stoßdämpfers, die z. B. Fluide oder Gase enthalten, in Wärmeenergie oder elektrische Energie umwandeln.

Beispielsweise ist aus der DE 10 2009 002 260 A1 ein hydraulischer Schwingungsdämpfer für ein Fahrzeug bekannt, der dazu dient, übermäßige Schwingungen eines Fahrzeugs zu dämpfen und die in den Schwingungsdämpfer eingebrachte Bewegungsenergie zunächst in eine Rotationsbewegungsenergie und diese mit einem verbundenem Generator in elektrische Energie umzuwandeln.

Des Weiteren ist aus der DE 10 2006 030 347 A1 ein lenkbares Anhängerfahrzeug bekannt, das eine hydraulische Maschine zur Verwertung kinetischer Energie aufweist, die in einem Generatorbetriebszustand ein Hydraulikmedium unter Druck setzen und einem hydraulischen Energiespeicher, z.B. Blasenspeicher, zuführen kann, und in einem Motorbetriebszustand als Hydromotor den Anhänger antreiben kann.

Zusätzlich zeigt die DE 10 2006 046 965 A1 einen Antrieb mit Bremsenergierückgewinnung, der bei motorisierten Fahrzeugen die Bremsenergie hydraulisch speichert und bei Bedarf diese gespeicherte Energie wieder über das Fahrzeuggetriebe in den Antriebsstrang einleitet.

Mit den bekannten Systemen kann die kinetische Energie wenigstens eines Rades z. B. während eines Bremsvorgangs rekuperiert werden. Die vorliegende Erfindung hat als Ziel, die an einem Fahrzeug auftretenden Energien noch effizienter zu rekuperieren, um den strengen Emissionsvorschriften gerecht zu werden und um das Fahrzeug beim Antreiben zu unterstützen.

### Zusammenfassung der Erfindung

Im Folgenden ist ein hydraulisches Rekuperationssystem für Fahrzeuge offenbart, das die durch Relativbewegungen zwischen einem Fahrzeugchassis und wenigstens einem Rad verursachte Schwingungsenergie des Fahrzeugs hydraulisch speichern und diese gespeicherte Energie bei Bedarf, z. B. bei Beschleunigungsvorgängen und/oder Bergauffahrten, zum Antreiben des Fahrzeugs bereitstellen kann. Das offenbarte Rekuperationssystem kann z. B. in schweren Zugfahrzeugen, Militärfahrzeugen, Baustellenfahrzeugen und Fahrzeugen aller Art eingesetzt werden. Außerdem kann das offenbarte Rekuperationssystem u. a. auch bei Fahrzeuganhängern effektiv sein. Hier kann das Rekuperationssystem am Fahrzeuganhänger, z. B. landwirtschaftliche Anhänger, Sattelauflieger, Transportanhänger und Anhängern aller Art, angebracht sein und kann wenigstens ein Rad des Fahrzeuganhängers antreiben, um somit das Zugfahrzeug beim Antreiben zu unterstützen.

Das offenbarte Rekuperationssystem für Fahrzeuge, das ein Chassis und wenigstens ein Radpaar aufweist, umfasst einen Hydrauliktank, der dazu ausgebildet ist, ein hydraulisches Medium zu speichern, einen Hochdruckspeicher, der dazu ausgebildet ist, das hydraulische Medium unter einem Hochdruck zu speichern, und eine mit dem Hydrauliktank und dem Hochdruckspeicher fluidverbundene Pumpeinheit, die dazu ausgebildet ist, unter Nutzung von zwischen dem Chassis und dem wenigstens einen Radpaar auftretenden Relativbewegungen das hydraulische Medium aus dem Hydrauliktank in den Hochdruckspeicher zu pumpen.

Das offenbarte Rekuperationssystem kann ferner mit einem Hydraulikmotor versehen sein, der mit dem Hydrauliktank und dem Hochdruckspeicher fluidverbunden und dazu ausgebildet ist, von dem unter Hochdruck stehenden hydraulischen Medium aus dem Hochdruckspeicher angetrieben zu werden und dadurch wenigstens ein Rad des Radpaars des Fahrzeugs anzutreiben.

Außerdem ist eine Kraftübertragungseinheit offenbart, die mit der Antriebseinheit des Fahrzeugs, z. B. dem Hydraulikmotor, verbunden und dazu ausgebildet sein kann, die von der Antriebseinheit erzeugte Kraft, die beispielsweise durch das Durchströmen des Hydraulikmotors mit dem unter Hochdruck stehenden hydraulischen Mediums erzeugt wird, an wenigstens ein Rad des Radpaars zu übertragen. Dabei kann in einer Ausführungsform die Kraftübertragungseinheit ein Getriebe aufweisen, dass die Kraft an ein Reibelement, das von einer Seite an eine Bremsscheibe des Radpaars gedrückt wird, überträgt. Diese Kraft wird dann von dem Reibelement unter Reibschluss an die Bremsscheibe weitergeleitet, um somit wenigstens ein Rad des Radpaars anzutreiben.

Ein anderes Ausführungsbeispiel kann vorteilhafterweise zwei Reibelemente aufweisen, die von beiden Seiten an die Bremsscheibe reibschlüssig angedrückt werden. Die Reibelemente können beispielsweise von einem Reibsattel getragen werden. Somit kann es möglich sein, z. B. die Bremsbacken eines Fahrzeugs durch den Reibsattel und den Reibelementen zu ersetzen, damit ein Fahrzeug mit der offenbarten Kraftübertragungseinheit nachträglich ausgestattet werden kann.

Des Weiteren ist ein Verfahren zur Rekuperation von Schwingungsenergie, die durch Relativbewegungen zwischen einem Chassis eines Fahrzeugs und wenigstens eines Radpaars des Fahrzeugs verursacht wird, offenbart, wobei das Verfahren eine Umwandlung der Relativbewegungen zwischen dem Chassis und des wenigstens einen Radpaars in Pumpbewegungen einer Pumpeinheit und ein Pumpen eines hydraulischen Mediums aus einem Hydrauliktank in einen Hochdruckspeicher umfasst.

Mit Hilfe des hierin offengelegten Rekuperationssystems und dem Verfahren zur Rekuperation der Schwingungsenergie eines Fahrzeugs kann der Kraftstoffverbrauch reduziert werden, da das Fahrzeug z. B. beim Beschleunigen, bei Bergauffahrten und bei Fahrten in schwerem Gelände durch das Rekuperationssystem unterstützt werden kann. Außerdem kann ein mit dem hierin vorgestellten Rekuperationssystem ausgestattetes Fahrzeug mit geringerer Motorisierung auskommen und kann dadurch zusätzlich den Kraftstoffverbrauch reduzieren.

### Kurze Beschreibung der Figuren

Im Folgenden werden Ausführungsbeispiele der Erfindung anhand der beiliegenden Zeichnungen näher erläutert. Die Ausführungsbeispiele werden an einem Fahrzeuganhänger exemplarisch verdeutlicht. Dabei zeigt

Fig. 1 eine schematische Darstellung eines Fahrzeuganhängers, der mit dem hierin offenbarten Rekuperationssystem versehen ist;

Fig. 2 eine schematische Darstellung des Rekuperationssystems der Fig. 1 in einer frontalen Ansicht eines Rades des Fahrzeuganhängers; und

Fig. 3 eine schematische Darstellung einer Übertragungseinheit, die die hydraulisch gespeicherte Energie zum Antreiben des Fahrzeuganhängers bereitstellen kann

### Detaillierte Beschreibung

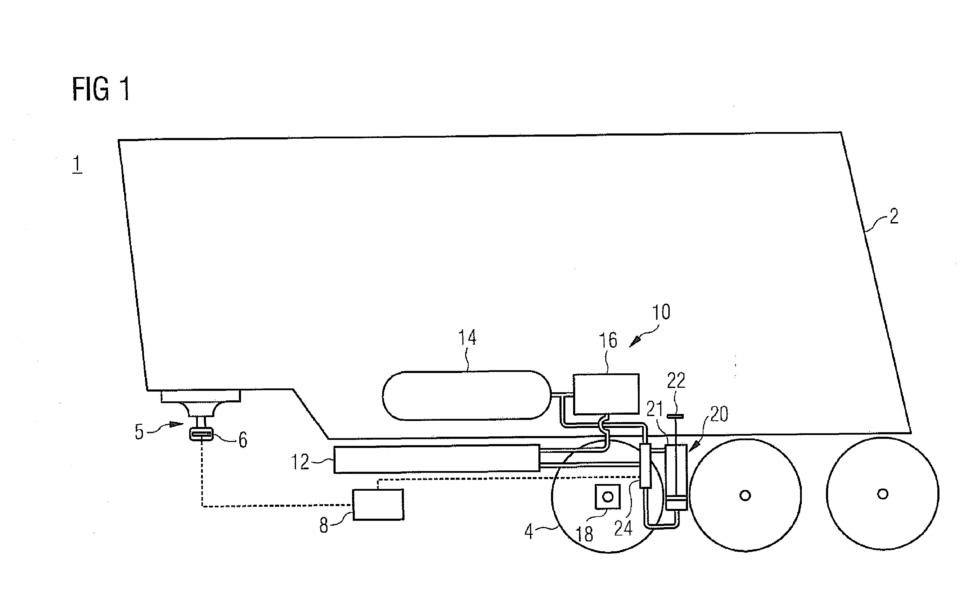

Mit Bezug auf die Fig. 1 soll beispielhaft der prinzipielle Aufbau des eines an einem Fahrzeuganhänger, insbesondere eines Sattelaufliegers 1, angebrachten Rekuperationssystems 10 veranschaulicht werden. Der Sattelauflieger 1, der von einem Zugfahrzeug (nicht dargestellt) gezogen wird, weist ein Chassis in Form eines Anhängerchassis 2 und wenigstens ein Radpaar 4 auf, das relativ zu dem Anhängerchassis 2, in vertikaler Richtung, beweglich gelagert ist. Der Sattelauflieger 1 kann durch ein gezogenes Fahrzeug aller Art, z.B. einen Wohnwagen, einen Transportanhänger, einen Fahrradanhänger, einen Pritschenanhänger oder ähnlichem, jedoch ausgenommen Schienenfahrzeuge, dargestellt werden und kann ein 1-Achs, 2-Achs oder Mehrachsanhänger sein. Außerdem ist anzumerken, dass der Sattelauflieger 1 nur als Beispiel für ein Fahrzeug anzusehen ist. Der Sattelauflieger 1 ist über ein Verbindungsteil 5 mit dem Zugfahrzeug gelenkig verbunden. Das Verbindungsteil 5 kann, wie in der Fig. 1 gezeigt, in Form eines Königszapfens ausgebildet sein. Bei einem Fahrzeuganhänger mit Deichsel kann das Verbindungsteil 5 z. B. eine Deichselkupplung sein, die in verschiedenen Ausführungen bekannt sind.

Das Verbindungsteil 5 kann mit einem Sensor 6 versehen sein, der dazu ausgebildet ist, die am Verbindungsteil 5 auftretenden Zug- und/oder Schubbelastungen des Sattelaufliegers 1 zu ermitteln. Der Sensor 6 kann z.B. durch einen Dehnungsmessstreifen, einen piezoelektronischen Beschleunigungsmesser oder ähnlichem dargestellt sein. Außerdem kann der Sensor 6 auch in den Befestigungsschrauben, mit denen die Königzapfenplatte und das Anhängerchassis 2 verschraubt werden, integriert sein.

Des Weiteren ist der in der Fig. 1 gezeigte Sattelauflieger 1 mit einer Steuereinheit 8 versehen, die mit dem Sensor 6 und dem Rekuperationssystem 10 in Verbindung steht und dazu ausgebildet ist, einen von dem Rekuperationssystem 10 erzeugten Strom eines hydraulischen Mediums, beispielsweise Hydrauliköl, zu steuern.

Wie in der Fig. 1 gezeigt, ist der Sattelauflieger 1 mit dem Rekuperationssystem 10 ausgestattet, das einen Hydrauliktank 12, der das hydraulische Medium speichert, einen Hochdruckspeicher 14, der das hydraulische Medium unter einem Hochdruck speichert, und eine Pumpeinheit 20, die mit dem Hydrauliktank 12 und dem Hochdruckspeicher 14 fluidverbunden ist, umfasst. Die Pumpeinheit 20 ist dazu ausgebildet, durch zwischen dem Anhängerchassis 2 und dem Radpaar 4 auftretenden Relativbewegungen betrieben zu werden und dabei das hydraulische Medium aus dem Hydrauliktank 12 in den Hochdruckspeicher 14 zu pumpen. Die Pumpeinheit 20 kann somit die durch die zwischen dem Anhängerchassis 2 und dem Radpaar 4 auftretenden Relativbewegungen in Pumpbewegungen umwandeln, um somit das hydraulische Medium aus dem Hydrauliktank 12 in den Hochdruckspeicher 14 zu pumpen.

Beispielsweise befindet sich der Hydrauliktank 12 unter einem Niederdruck, beispielsweise unter Normaldruck. Der Hochdruckspeicher 14 steht hingegen unter einem Druck, der größer als der Niederdruck ist. Vorzugsweise wird der Hochdruckspeicher 14 durch einen Hydraulikblasenspeicher dargestellt und kann ein Volumen von ungefähr 200 Litern aufweisen und mit einen maximalen Druck von ungefähr 350 bar beaufschlagt werden.

Ferner kann das Rekuperationssystem 10 mit einem Hydraulikmotor 16 versehen sein, der mit dem Hydrauliktank 12, dem Hochdruckspeicher 14 und über eine Kraftübertragungseinheit 18 mit dem wenigstens einem Radpaar 4 verbunden ist. Der Hydraulikmotor 16 ist dazu ausgebildet, das unter Hochdruck stehende hydraulische Medium aus dem Hochdruckspeicher 14 zu Empfangen und das Radpaar 4 über die Kraftübertragungseinheit 18 anzutreiben.

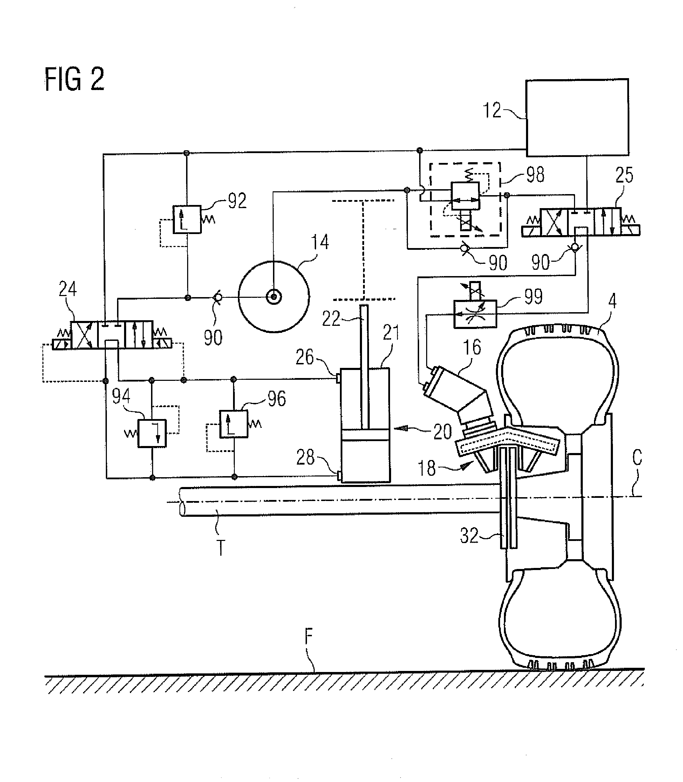

Mit Bezug auf die Fig. 2 ist schematisch der Aufbau des Rekuperationssystems 10 der Fig. 1 in einer frontalen Ansicht gezeigt, in der sich das Radpaar 4 auf einer unebenen Fahrbahn F befindet. Dabei ist die Pumpeinheit 20 ferner dazu ausgebildet, die durch die unebene Fahrbahn auftretenden Stöße zu dämpfen, d. h. die Pumpeinheit 20 wirkt als Stoßdämpfer. In anderen Ausführungsformen kann die Pumpeinheit 20 zusätzlich zu einem Stoßdämpfer eingesetzt sein oder auch in den Stoßdämpfer integriert ausgeführt sein.

Die Pumpeinheit 20 weist einen Pumpzylinder 21 und einen Pumpkolben 22 auf, der in dem Pumpzylinder 20 beweglich gelagert ist. Der Pumpzylinder 21 kann mit dem Radträger T verbunden sein, wobei der Pumpkolben 22 mit dem Anhängerchassis 2 (in der Fig. 2 nicht gezeigt) verbunden sein kann. In einer anderen Ausführungsform kann der Pumpzylinder 21 mit dem Anhängerchassis 2 verbunden sein, wobei der Pumpkolben 22 mit dem Radträger T verbunden sein kann. Des Weiteren weist der Pumpzylinder 21 eine erste Öffnung 26 und eine zweite Öffnung 28 auf, wobei sich die erste Öffnung 26 an einem oberen Punkt des Pumpzylinders 21 und die zweite Öffnung 28 an einem unteren Punkt des Pumpzylinders 21 befindet.

Um einen durch die Pumpbewegungen der Pumpeinheit 20 erzeugten hydraulische Strom zu lenken, ist das Rekuperationssystem 10 mit einem Ventilsystem versehen, das z. B. Wegeventile 24, 25, Rückschlagventile 90, Druckbegrenzungsventile 92, 94, 96, ein Druckreduzierventil 98 und eine Drossel 99 umfassen kann. Dabei sei angemerkt, dass die Steuereinheit 8 dazu ausgebildet sein kann, das Ventilsystem zu steuern, z. B. dass die Steuereinheit 8 die Ventile in ihre unterschiedlichen Stellungen so schaltet, dass das hydraulische Medium wie gewünscht Strömen kann.

Das Wegeventil 24 ist dazu ausgebildet, den hydraulischen Strömungsweg des durch die Pumpeinheit 20 erzeugten hydraulischen Stroms zu lenken. Somit kann das hydraulische Medium aus dem Hydrauliktank 12 in den Hochdruckspeicher 14 gepumpt werden, unabhängig davon, ob sich der Pumpkolben 22 nach oben oder unten bewegt.

Das Wegeventil 24 kann, wie in der Fig. 2 dargestellt, ein 4/3-Wegeventil sein, das mit der ersten Öffnung 26 der Pumpeinheit 20, der zweiten Öffnung 28 der Pumpeinheit 20, dem Hydrauliktank 12 und dem Hochdruckspeicher 14 fluidverbunden ist. Das 4/3-Wegeventil, welches über die Steuereinheit 8 (in der Fig. 2 nicht dargestellt) bewegt werden kann, ist dazu ausgebildet, je nach Bewegungszustand des Pumpkolbens 22 innerhalb der Pumpkammer 21, so umzuschalten, dass das hydraulische Medium aus dem Hydrauliktank 12 in den Hochdruckspeicher 14 gepumpt wird.

Unter Bezugnahme auf die Fig. 2 bedeutet das, dass wenn sich der Pumpkolben 21 nach oben bewegt, d.h. federt die Pumpeinheit 20 aus, schaltet die Steuereinheit 8 das 4/3-Wegeventil 24 in die rechte Stellung und es wird das hydraulische Medium über die erste Öffnung 26 in den Hochdruckspeicher 14 gepumpt. Bewegt sich jedoch der Pumpkolben 22 nach unten, d. h. die Pumpeinheit 20 federt ein, schaltet die Steuereinheit 8 das 4/2-Wegeventil 24 in die linke Stellung, in der das hydraulische Medium ebenfalls über die zweite Öffnung 28 in den Hochdruckspeicher 14 gepumpt wird. Es sei angemerkt, dass in beiden Stellungen das hydraulische Medium aus dem Hydrauliktank in den Pumpzylinder nachströmen kann.

Befindet sich das 4/3-Wegeventil in der mittleren Neutralstellung, d. h. in einer drucklosen Umlaufstellung, so wirkt die Pumpeinheit 20 lediglich als hydraulische Dämpfeinheit und es wird kein hydraulisches Medium aus dem Hydrauliktank 12 in den Hochdruckspeicher 14 gepumpt. Dabei sei angemerkt, dass der Pumpkolben 22 eine Durchgangsbohrung (nicht gezeigt) besitzen kann, die einen Durchfluss für das hydraulische Medium ermöglicht und die das hydraulische Medium drosselt, wobei dadurch eine Dämpfwirkung entsteht.

Mit der soeben beschriebenen Ausführung ist es möglich, die Relativbewegungen zwischen dem Anhängerchassis 2 und dem Radpaar 4 in Pumpbewegungen der Pumpeinheit 20 umzuwandeln. Dabei kann das hydraulische Medium unabhängig von der Richtung der Relativbewegungen, d. h. wenn sich der Pumpkolben nach oben und nach unten bewegt, aus dem Hydrauliktank 12 in den Hochdruckspeicher 14 gepumpt werden.

In einer anderen Ausführungsform ist es möglich, beispielsweise während einer Einfederbewegung oder während einer Ausfederbewegung des Pumpkolbens 21 das hydraulische Medium aus dem Hydrauliktank 12 in den Hochdruckspeicher 14 zu pumpen.

Wie bereits erwähnt kann das im Hochdruckspeicher 14 unter Hochdruck stehende hydraulische Medium dazu genutzt werden, den Hydraulikmotor 16 anzutreiben, der daraufhin wiederum wenigstens ein Radpaar 4 des Sattelanhängers 1 antreibt. Hierfür ist der hydraulische Motor 16 mit dem Hochdruckspeicher 14 und über eine Kraftübertragungseinheit 18 mit wenigstens einem Radpaar 4 verbunden. Soll wenigstens ein Radpaar 3 des Fahrzeuganhängers angetrieben werden, strömt das unter Hochdruck stehende hydraulische Medium aus dem Hochdruckspeicher 14 in den Hydraulikmotor 16, entspannt sich im Hydraulikmotor 16 und treibt diesen an, der daraufhin seine Rotation über die Kraftübertragungseinheit 18 an wenigstens ein Radpaar 4 abgibt. Die Steuereinheit 8 schaltet hiefür das Ventilsystem so um, dass das hydraulische Medium wie beschrieben aus dem Hochdruckspeicher 14 über den Hydraulikmotor 16 in den Hydrauliktank 12 strömen kann.

Es sei angemerkt, dass es während dem Antreiben des wenigstens einen Radpaars 4 des Sattelaufliegers 1 weiterhin möglich ist, mit Hilfe der Relativbewegungen zwischen dem Anhängerchassis 2 und wenigstens einem Radpaar 4 die Pumpeinheit 20 betrieben werden kann, die dabei das hydraulische Medium aus dem Hydrauliktank 12 in den Hochdruckspeicher 14 pumpt. Hierfür weist der Hydrauliktank 12 zusätzlich zu einem Auslass einen Einlass und der Hochdruckspeicher 14 zusätzlich zu einem Einlass einen Auslass auf.

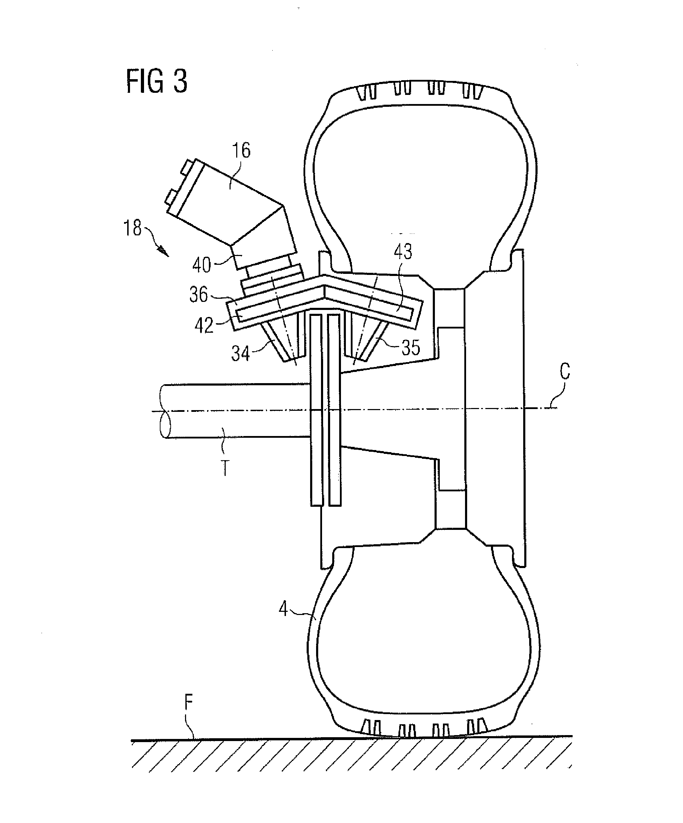

Mit Bezug auf die Fig. 3 soll die Kraftübertragungseinheit 18 genauer betrachtet werden. Wie bereits erwähnt ist die Kraftübertragungseinheit 18 mit dem Hydraulikmotor 16 und wenigstens einem Radpaar 4 des Sattelaufliegers 1 verbunden und dazu ausgebildet, die Rotationsbewegung des von dem unter Hochdruck stehenden hydraulischen Mediums angetriebenen Hydraulikmotors 16 an wenigstens ein Radpaar 4 zu übertragen, um dieses anzutreiben. Hierzu kann die Kraftübertragungseinheit 18 ein mit dem Hydraulikmotor 16 verbundenes Winkelgetriebe 40 aufweisen, das über einen Reibsattel 36 und zwei Reibelemente 34,35, beispielsweise Reibräder, mit einer Bremsscheibe 32 der Radachse C verbunden sein kann. Die zwei Reibelemente 34, 35 können z. B. über pneumatische Kräfte an die Bremsscheibe 32 gedrückt werden und können von dem Reibsattel 36 drehbar gelagert werden. Die zwei Reibelemente 34, 35 sind über Zahnräder 42, 43 miteinander verbunden, die ebenfalls innerhalb des Reibsattels 36 gelagert sind. Wie in der Fig. 3 gezeigt kann das Zahnrad 42 mit dem Winkelgetriebe 40 verbunden sein.

Im Betrieb können die Rotationsbewegungen des Hydraulikmotors 16 vom Winkelgetriebe 40 an das Zahnrad 42, das das Zahnrad 43 antreibt abgegeben werden. Über die Zahnräder 42, 43 wird die Kraft über einen Reibschluss zwischen den Reibelementen 34, 35 und der Bremsscheibe 32 an wenigstens ein Radpaar 4 des Sattelaufliegers 1 abgegeben. Mit Hilfe dieser Kraftübertragungseinheit 18 kann das Zugfahrzeug, das den Sattelauflieger 1 zieht, beim Antreiben des Zuggespanns unterstützt werden.

Die zuvor beschriebene Kraftübertragungseinheit 18 kann ein bereits im Fahrzeuganhänger 1 vorhandenes Bremssystem ersetzen, insbesondere kann ein bereits vorhandener Bremssattel gegen den Reibsattel 36 und die Reibelemente 34, 35 ausgetauscht werden, so dass ein Fahrzeug oder auch ein Fahrzeuganhänger mit dem hierin vorgestellten Rekuperationssystem 10 nachträglich ausgerüstet werden können.

Mit Bezug auf die Figuren 1 bis 3 wird im Folgenden der Betrieb des Rekuperationssystems 10 beschrieben.

Während der Sattelauflieger 1 von einem Zugfahrzeug (nicht dargestellt) auf einer unebenen Fahrbahn F bewegt wird, ergeben sich Relativbewegungen zwischen dem Anhängerchassis 2 und wenigstens einem Radpaar 4. Diese Relativbewegungen können von der Pumpeinheit 20 gedämpft und dazu genutzt werden, das hydraulische Medium aus dem Hydrauliktank 12 in den Hochdruckspeicher 14 zu pumpen. Hierfür pumpt der Pumpkolben 22, der sich innerhalb des Pumpzylinders 21 hin und herbewegen kann, das hydraulische Medium aus dem Hydrauliktank 12 in den Hochdruckspeicher 14. Die oben erwähnten Relativbewegungen zwischen dem Anhängerchassis 2 und dem Radpaar 4 können auch z.B. aufgrund von Neigungen des Sattelaufhängers 1 in Kurvenfahrten, durch Windbelastungen, durch Nickbewegungen bei Beschleunigungs- oder Bremsvorgängen oder ähnliches verursacht werden. Wie bereits beschrieben, schaltet die Steuereinheit 8 das Ventilsystem, insbesondere das 4/3-Wegeventil 24, so um, dass das hydraulische Medium von der Pumpeinheit 20 aus dem Hydrauliktank 12 in den Hochdruckspeicher 14 gepumpt werden kann. Das 4/3-Wegeventil 24 befindet sich in der rechten Stellung, wenn sich der Pumpkolben 22 nach oben bewegt bzw. ausfedert. Federt der Pumpkolben 22 der Pumpeinheit 20 ein bzw. bewegt sich nach unten, wird das 4/3-Wegeventil 24 von der Steuereinheit 8 in die linke Stellung geschaltet. Während dem Befüllen des Hochdruckspeichers 14 mit dem hydraulischen Medium steigt der Druck darin kontinuierlich an.

Ob ein Bedarf zum Antreiben des Sattelaufliegers 1 vorliegt, hängt von dem jeweiligen Fahrzustand, insbesondere des Beschleunigungszustands des Sattelaufliegers 1, ab. Wird am Verbindungsteil 5 mit Hilfe des Sensors 6 eine Zugbelastung ermittelt, die einen vorbestimmten Wert überschreitet, z. B. bei einem Beschleunigungsvorgang des Zugfahrzeugs oder bei einer Bergauffahrt des Zuggespanns, schaltet die Steuereinheit 8 das Ventilsystem so um, dass das hydraulische Medium aus dem Hochdruckspeicher 14 durch den hydraulischen Motor 16 in den Hydrauliktank 12 strömen kann, um die im Hochdruckspeicher 14 hydraulisch gespeicherte Energie zum Antreiben des Sattelaufliegers 1 zu nutzen. Dabei treibt das hydraulische Medium den Hydraulikmotor 16 an, der seine Rotationsbewegung über die Kraftübertragungseinheit 18 and das Radpaar 4 abgeben kann.

Hierbei ist anzumerken, dass auch während dem Antreiben des Sattelaufliegers 1 weiterhin durch die zwischen dem Anhängerchassis 2 und dem Radpaar 4 auftretenden Relativbewegungen das hydraulische Medium aus dem Hydrauliktank 12 in den Hochdruckspeicher 14 gepumpt werden kann.

Wird jedoch am Verbindungsteil 5 mit Hilfe des Sensors 6 eine Druckbelastung ermittelt, die einen vorbestimmten Wert überschreitet, z. B. während eines Bremsvorgangs oder bei einer Bergabfahrt, schaltet die Steuereinheit 8 das Ventilsystem so um, dass das hydraulische Medium nicht aus dem Hochdruckspeicher 14 entweichen kann, d. h. dass der hydraulische Motor 16 den Sattelauflieger 1 nicht antreibt.

Es sei angemerkt, dass die Betriebszustände, von denen abhängt, ob ein Bedarf an zusätzlicher Antriebsunterstützung durch das Rekuperationssystem 10 besteht, auch von anderen Parametern gesteuert werden kann. So kann ein mit dem offenbarten Rekuperationssystem 10 ausgerüstetes Fahrzeug beim Antrieb unterstützt werden, wenn z. B. ein vorbestimmter Beschleunigungswert des Fahrzeugs überschritten wird.

Zusätzlich zur Rekuperation der Schwingungsenergie, die durch die Relativbewegungen zwischen dem Anhängerchassis 2 und dem Radpaar 4 erzeugt wird, kann das Rekuperationssystem 10 ferner dazu verwendet werden, die kinetische Energie des Sattelaufliegers 1 mit Hilfe der Übertragungseinheit 18 zu rekuperieren. Wie in der Fig. 3 gezeigt, kann die Rotation des Radpaars 4 über die Kraftübertragungseinheit 18 an den Hydraulikmotor 16 geleitet werden, der dabei als Hydraulikpumpe arbeitet und der das hydraulische Medium aus dem Hydrauliktank 12 in den Hochdruckspeicher 14 pumpen kann.

Die Steuerung der soeben erwähnten Speicherung der kinetischen Energie des Sattelaufliegers 1 erfolgt ebenfalls durch die Steuereinheit 8. Wird z. B. am Verbindungsteil 5 mit Hilfe des Sensors 6 eine Druckbelastung ermittelt, die einen vorbestimmten Wert überschreitet, z. B. während einem Bremsvorgang des Zugfahrzeugs oder einer Bergabfahrt des Zuggespanns, so wird wie oben erwähnt die Rotationsenergie des Radpaars 4 an den hydraulischen Motor 16 geleitet, der dann als Pumpe arbeitet und die kinetische Energie des Sattelaufliegers 1 hydraulisch in Form von Druck im Hochdruckspeicher 14 speichert. Diese kinetisch gespeicherte Energie kann ebenfalls zum Antreiben des Sattelanhängers 1 über den Hydraulikmotor 16 und der Kraftübertragungseinheit 18 dem Radpaar 4 bereitgestellt werden.

Des Weiteren kann die Speicherung der kinetischen Energie des Sattelanhängers 1 über die Geschwindigkeit gesteuert werden, die z.B. über einen Sensor (nicht gezeigt) am Radpaar 4 gemessen werden kann. Dabei wird die Speicherung der kinetischen Energie unterbrochen, wenn die Geschwindigkeit kleiner als ein vorbestimmter Wert, z. B. 5 km/h, ist oder wenn sich das Fahrzeug, z. B. der Sattelauflieger 1, rückwärts bewegt.

Es sei angemerkt, dass bei z. B. landwirtschaftlich verwendeten Fahrzeuganhängern der als Energiespeicher wirkende Hochdruckspeicher 14 auch am Zugfahrzeug angeordnet sein kann. Außerdem kann die Speicherung der Schwingungsenergie des Fahrzeuganhängers ebenso elektrisch oder auch als Kombination von hydraulisch und elektrisch erfolgen.

Des Weiteren kann die Kraftübertragung von dem Hydraulikmotor hin zum Radpaar 4 auch über eine Antriebsachse des Fahrzeuganhängers erfolgen. Hierbei kann beispielsweise auch ein Differentialgetriebe eingesetzt werden, das die Verwendung von Reibelementen, die an eine Bremsscheibe gedrückt werden, überflüssig macht.

Mit dem soeben vorgestellten Rekuperationssystem für Fahrzeuge können verschiedene Vorteile bewirkt werden. Die bisher über die Stoßdämpfer in von Form von Wärme verlorene Schwingungsenergie des Fahrzeugs, aber auch die kinetische Bremsenergie des Fahrzeugs, kann effizient gespeichert und anschließend sinnvoll zum Antreiben des Fahrzeugs genutzt werden. Dabei wird das Fahrzeug beim Antreiben unterstützt, was zu niedrigeren Verbrauchswerten des Fahrzeugs und damit zu einer verbesserten Umweltschonung beiträgt.

Es sei angemerkt, dass das vorgestellte Rekuperationssystem nicht auf die in Verbindung mit der in den Figuren 1 bis 3 beschriebenen Ausführungsform eines Sattelaufliegers begrenzt ist. Aus diesem Grund können, wie bereits erwähnt, jegliche Form von Fahrzeugen mit dem hierein offenbarten Rekuperationssystem ausgestattet werden. Außerdem kann das vorgestellte Rekuperationssystem auch in Wohnwägen, Fahrradanhängern, Transportanhängern, Pritschenanhängern oder jeglichen Formen von Anhängern mit dem hierin offenbarten Rekuperationssystem versehen werden.

## Patentansprüche

1. Rekuperationssystem (10) für ein Fahrzeug (1), das ein Chassis (2) und wenigstens ein Radpaar (4) aufweist, mit
- einem Hydrauliktank (12), der dazu ausgebildet ist, ein hydraulisches Medium zu speichern;
- einem Hochdruckspeicher (14), der dazu ausgebildet ist, das hydraulische Medium unter einem Hochdruck zu speichern; und
- einer mit dem Hydrauliktank (12) und dem Hochdruckspeicher (14) fluidverbundenen Pumpeinheit (20), die dazu ausgebildet ist, unter Nutzung von zwischen dem Chassis (2) und dem Radpaar (4) auftretenden Relativbewegungen das hydraulische Medium aus dem Hydrauliktank (12) in den Hochdruckspeicher (14) zu pumpen.

2. Rekuperationssystem (10) nach Anspruch 1 oder 2, wobei die Pumpeinheit (20) einen Pumpzylinder (21) und einen Pumpkolben (22), der innerhalb des Pumpzylinders (21) beweglich gelagert ist, aufweist und ferner dazu ausgebildet ist, die Relativbewegungen zwischen dem Chassis (2) und dem Radpaar (4) in Pumpbewegungen des Kolbens (22) umzuwandeln.

3. Rekuperationssystem (10) nach einem der vorherigen Ansprüche, ferner mit einem Hydraulikmotor (16), der mit dem Hydrauliktank (12) und dem Hochdruckspeicher (14) fluidverbunden und dazu ausgebildet ist, von dem unter Hochdruck stehenden hydraulischen Medium aus dem Hochdruckspeicher (14) angetrieben zu werden und wenigstens ein Rad des Radpaars (4) des Fahrzeugs (1) anzutreiben.

4. Rekuperationssystem (10) nach Anspruch 3, wobei der Hydraulikmotor (16) ferner dazu ausgebildet ist, durch das Radpaar (4) des Fahrzeugs (1) angetrieben zu werden und das hydraulische Medium aus dem Hydrauliktank (12) in den Hochdruckspeicher (14) zu pumpen.

5. Rekuperationssystem (10) nach Anspruch 4, ferner mit einer Kraftübertragungseinheit (18), die mit dem Hydraulikmotor (16) verbunden und dazu ausgebildet ist, die von dem Hydraulikmotor (16) erzeugte Kraft, die durch ein Durchströmen des Hydraulikmotors (16) mit dem unter Hochdruck stehenden hydraulischen Mediums erzeugt wird, an das Radpaar (4) zu übertragen.

6. Rekuperationssystem (10) nach Anspruch 5, wobei die Kraftübertragungseinheit (18) wenigstens ein Reibelement (34, 35) enthält, das mit einer Bremsscheibe (32) des Radpaars (4) kraftschlüssig in Kontakt steht und dazu ausgebildet ist, die Bremsscheibe (32) des Radpaars (4) anzutreiben.

7. Rekuperationssystem (10) nach einem der Ansprüche 3 bis 6, ferner mit einer Steuereinheit (8), die dazu ausgebildet ist, den Hydraulikstrom innerhalb des Rekuperationssystems (10) so zu steuern, dass das hydraulische Medium aus dem Hydrauliktank (12) in den Hochdruckspeicher (14) strömt und bei Bedarf das hydraulische Medium aus dem Hochdruckspeicher (14) durch den Hydraulikmotor (16) strömt.

8. Fahrzeug (1) mit:
einem Chassis (2);
wenigstens einem Radpaar (4), das drehbar am Chassis (2) angeordnet ist; und
einem Rekuperationssystem (10) nach einem der Ansprüche 1 bis 7.

9. Fahrzeug (1) nach Anspruch 8, wobei das Fahrzeug (1) ein Fahrzeuganhänger ist, der mit einem Zugfahrzeug über ein Verbindungsteil (5) lösbar verbunden ist, wobei ein Sensor (6), an dem Verbindungsteil (5) angeordnet und dazu ausgebildet ist, eine Zug- oder Druckbelastung des Fahrzeuganhängers zu ermitteln.

10. Fahrzeug (1) nach Anspruch 9, wobei der Sensor (6) ein Dehnungsmessstreifen ist.

11. Fahrzeug (1) nach einem der Ansprüche 8 bis 10, wobei die Steuereinheit (8) ferner dazu ausgebildet ist, die von dem Sensor (6) ermittelte Zug- oder Druckbelastung des Fahrzeuganhängers zu empfangen und das unter Hochdruck stehende hydraulische Medium aus dem Hochdruckspeicher (14) durch den Hydraulikmotor (16) in den Hydraulikmotor (12) strömen zu lassen, wenn die von dem Sensor (6) ermittelte Zug- oder Druckbelastung des Fahrzeuganhängers eine vorbestimmten Zug- oder Druckbelastung überschreitet.

12. Verfahren zur Rekuperation von Schwingungsenergie, die durch Relativbewegungen zwischen einem Chassis (2) eines Fahrzeugs (1) und wenigstens eines Radpaars (4) des Fahrzeugs verursacht wird, umfassend:
Umwandlung der Relativbewegungen zwischen dem Chassis (2) und dem wenigstens einem Radpaar (4) in Pumpbewegungen einer Pumpeinheit (20); und
Pumpen eines hydraulischen Mediums aus einem Hydrauliktank (12) in einen Hochdruckspeicher (14).

13. Verfahren nach Anspruch 12, ferner aufweisend:
Ermitteln einer Zug- oder Druckbelastung des Fahrzeuganhängers; und
Zuführen des unter Hochdruck stehenden hydraulischen Mediums zu einem Hydraulikmotor (16), der dazu ausgebildet ist, wenigstens ein Rad des Radpaars (4) anzutreiben, wenn die ermittelte Zug- oder Druckbelastung des Fahrzeuganhängers eine vorbestimmte Zug- oder Druckbelastung überschreitet.

14. Kraftübertragungseinheit (18) für ein Fahrzeug, das wenigstens ein Radpaar (4) aufweist, mit:
einem Übertragungsgetriebe (40), das mit einer Antriebseinheit (16) des Fahrzeugs (1) verbunden ist; und
wenigstens einem Reibelement (32, 35), das dazu ausgebildet ist, die von der Antriebseinheit (16) erzeugte Kraft über die Bremsscheibe (32) an wenigstens ein Rad des Radpaars (4) zu übertragen.

15. Kraftübertragungseinheit (18) nach Anspruch 14, ferner mit einem Reibsattel (36), der dazu ausgebildet ist, das wenigstens eine Reibelement (34, 35) drehbar zu lagern.
